# EUROPÄISCHE PATENTSCHRIFT

(11) **EP 3 301 353 B1**
(45) Veröffentlichungstag und Bekanntmachung des Hinweises auf die Patenterteilung: **05.05.2021**
(21) Anmeldenummer: 17192147.1
(22) Anmeldetag: 20.09.2017
(51) Int. Cl.: F21S 43/237, F21V 8/00

(54) **KRAFTFAHRZEUGBELEUCHTUNGSEINRICHTUNG MIT EINEM LICHTLEITER**
MOTOR VEHICLE LIGHTING DEVICE WITH A LIGHT GUIDE
PHARE DE VÉHICULE AUTOMOBILE COMPRENANT UN CONDUCTEUR DE LUMIÈRE

(30) Priorität: 30.09.2016 DE 102016118603
(43) Veröffentlichungstag der Anmeldung: 04.04.2018
(73) Patentinhaber: Automotive Lighting Reutlingen GmbH, 72762 Reutlingen (DE)
(72) Erfinder: Kleiner, Thomas, 72800 Eningen (DE)
(74) Vertreter: DREISS Patentanwälte PartG mbB

(56) Entgegenhaltungen:
- DE-A1- 10 065 020
- JP-A- 2015 018 689
- JP-A- 2015 185 524
- US-A1- 2008 002 427

## Beschreibung

Die vorliegende Erfindung betrifft eine Kraftfahrzeugbeleuchtungseinrichtung nach dem Oberbegriff des Anspruchs 1.

Eine solche Kraftfahrzeugbeleuchtungseinrichtung ist aus der US 2008/0002427 A1 bekannt und weist ein Leuchtenmodul auf, das eine Signallichtfunktion erfüllt. Das Leuchtenmodul weist einen sich in einer Längsrichtung erstreckenden, langgestreckten Lichtleiter auf, der eine sich in der Längsrichtung erstreckende Vorderseite, eine der Vorderseite gegenüberliegende Rückseite und zwischen der Vorderseite und der Rückseite liegende Seitenflächen aufweist. In der Rückseite sind erste Teilflächen angeordnet, die ein lichtleitendes Volumen des Lichtleiters begrenzen und die gegenüber der Längsrichtung des Lichtleiters mit einem ersten Anstellwinkel verkippt angeordnet sind. Der Lichtleiter weist zweite Teilflächen auf, die einen aus einer Fläche des Lichtleiters herausragenden lichtleitenden Vorsprung des Lichtleiters begrenzen, und die gegenüber einer Längsrichtung des Lichtleiters mit einem zweiten Anstellwinkel verkippt angeordnet sind. Der zweite Anstellwinkel ist größer als der erste Anstellwinkel und insbesondere so groß, dass aus dem Inneren des Lichtleiters auf die zweiten Teilflächen einfallendes Licht, das aus derselben Richtung einfällt wie aus dem Inneren des Lichtleiters auf die ersten Teilflächen einfallendes Licht, das dort noch interne Totalreflexionen erfährt, direkt aus der jeweiligen zweiten Teilfläche austritt.

Die Kraftfahrzeugbeleuchtungseinrichtung weist darüber hinaus ein Bauteil auf, das die Vorderseite für einen Betrachtungswinkelbereich zum Teil oder auch ganz verdeckt. Letzteres ist aus lichttechnischen Gründen nicht erwünscht, kommt aber aufgrund gestalterischer Vorgaben, die durch die Kraftfahrzeugbeleuchtungseinrichtung erfüllt werden müssen vor.

Die Vorderseite dient als primäre Lichtaustrittsfläche, also als die Lichtaustrittsfläche, aus welcher der weitaus größte Teil des aus dem Lichtleiter auszukoppelnden Lichtes austritt. Darüber hinaus dient die Vorderseite, wie auch die Seitenflächen, als Transportflächen, an denen das im Lichtleiter propagierende Licht lichtleitende interne Totalreflexionen erfährt. Jede Seitenfläche verbindet die Vorderseite mit der Rückseite des Lichtleiters. Die in der Rückseite gegenüber der Längsrichtung x verkippt angeordneten ersten Teilflächen lenken auf sie aus dem Inneren des Lichtleiters einfallendes Licht so steil zur Vorderseite um, dass das umgeleitete Licht aus der Vorderseite austritt. Der erste Anstellwinkel ist gerade so festgelegt, dass sich diese lichtumlenkende Wirkung ergibt.

Der langgestreckte Lichtleiter kann eine in der Richtung seiner Längserstreckung im Raum gekrümmt oder gerade verlaufende Gestalt aufweisen. Auf diese Weise lassen sich mit dem Lichtleiter vielgestaltige Erscheinungsbilder leuchtender Strukturen erzeugen, die nicht nur dazu dienen, regelkonforme Signallichtverteilungen zu erzeugen, sondern die mit ihrer Form zum Beispiel auch als Signatur zur Kennzeichnung von Fahrzeugtypen oder Fahrzeugmarken dienen.

Kraftfahrzeugbeleuchtungseinrichtungen müssen, um regelkonform zu sein, in einem ersten Raumwinkelbereich bestimmte Helligkeitswerte erzeugen. In Bezug auf eine Hauptabstrahlrichtung, die bei einer bestimmungsgemäßen Verwendung parallel zur Fahrzeuglängsachse ist, ist dies zum Beispiel ein Bereich on +/- 20° in horizontaler Richtung und von +/- 10° in vertikaler Richtung. Darüber hinaus muss die eingeschaltete Leuchte aus einem zweiten Raumwinkelbereich, der den ersten Raumwinkelbereich mit einschließt, zumindest sichtbar sein.

Aufgrund von Designvorgaben ist es möglich, dass der Lichtleiter der Beleuchtungseinrichtung für bestimmte in dem zweiten Raumwinkelbereich liegende Betrachtungsrichtungen durch Bauteile der Beleuchtungseinrichtung verdeckt wird, so dass die Sichtbarkeitskriterien für diese Betrachtungsrichtungen nicht erfüllt werden. Die Form der Lichtleiter ist dabei häufig durch gestalterische Vorgaben ebenfalls festgelegt, weil sie zum Beispiel als Signatur zur Erkennung von Fahrzeugmarken dienen soll.

Vor diesem Hintergrund besteht die Aufgabe der Erfindung in der Angabe einer Beleuchtungseinrichtung, mit der sich ein vergrößerter Sichtbarkeitsbereich ergibt.

Diese Aufgabe wird mit den Merkmalen des Anspruchs 1 gelöst. Die erfindungsgemäße Beleuchtungseinrichtung zeichnet sich dadurch aus, dass die Fläche des Lichtleiters, aus welcher der lichtleitende Vorsprung herausragt, eine Seitenfläche des Lichtleiters ist, und dass das Leuchtenmodul einen Reflektor aufweist, der im Lichtweg des über die zweite Teilfläche direkt ausgetretenen Lichtes angeordnet ist und dazu eingerichtet ist, dieses Licht durch den Lichtleiter hindurch oder an dem Lichtleiter vorbei zu richten, und dieses Licht durch den Lichtleiter hindurch oder an dem Lichtleiter vorbei zu richten und dass die Vorderseite (12) des Lichtleiters (10) in seiner zu seiner Führungslinie (x) senkrechten Ebene konvex gekrümmt ist.

Dadurch, dass die Fläche des Lichtleiters, aus welcher der lichtleitende Vorsprung herausragt, eine Seitenfläche des Lichtleiters ist, wird ein leuchtender Rand des Lichtleiters erzeugt, der in Verbindung mit dem Reflektor die Sichtbarkeitswerte des Leuchtenmoduls verbessert ohne die mit Hilfe der in der Rückseite des Lichtleiters angeordneten Teilflächen erzeugte Lichtverteilung nachteilig zu beeinflussen.

Während das aus der bevorzugt glatten Vorderseite austretende Licht gleich in den richtigen Halbraum austritt, in dem sich auch der Betrachter befindet, tritt das über die zweiten Teilflächen austretende Licht bevorzugt noch nicht in diesen ersten Halbraum, sondern in einen dem ersten Halbraum gegenüberliegenden zweiten Halbraum aus. Durch den Reflektor wird das über die zweiten Teilflächen ausgekoppelte Licht dann an dem Sichtbarkeitshindernis, sei es eine Blende, ein Zierrahmen oder ein anderer Bestandteil der Kraftfahrzeugbeleuchtungseinrichtung, vorbei in die für direkte Sichtbarkeit verdeckte Blickrichtung gerichtet, so dass die Sichtbarkeitskriterien auch für diese Blickrichtungen erfüllt werden können, ohne dass dafür die Form des Lichtleiters oder des Sichtbarkeitshindernisses geändert werden müsste.

Auf diese Weise erfüllt die erfindungsgemäße Kraftfahrzeugbeleuchtungseinrichtung die Sichtbarkeitskriterien auch für solche Betrachtungswinkel in denen der Lichtleiter selbst durch ein anderes Bauteil der Kraftfahrzeugbeleuchtungseinrichtung verdeckt wird. Unter der Prämisse, dass die Sichtbarkeitskriterien in jedem Fall erfüllt werden müssen, ergibt sich durch die Erfindung eine größere Gestaltungsfreiheit beim Entwurf der Form der Kraftfahrzeugbeleuchtungseinrichtung, der Anordnung Gestalt seiner Bauteile wie Blenden und Zierrahmen und der Gestalt des Lichtleiters.

Eine bevorzugte Ausgestaltung zeichnet sich dadurch aus, dass der aus einer der Seitenflächen des Lichtleiters herausragende lichtleitende Vorsprung an der breitesten Stelle des Lichtleiters angeordnet ist.

Bevorzugt ist auch, dass der aus einer der Seitenflächen des Lichtleiters herausragende lichtleitende Vorsprung des Lichtleiters am Übergang von der Vorderseite zu einer Seitenfläche angeordnet ist.

Ferner ist bevorzugt, dass ein Vorsprung mit zweiten Teilflächen in einer ersten Seitenfläche so angeordnet ist, dass ein Teil der Seitenfläche zwischen der Vorderseite und dem Vorsprung und ein anderer Teil zwischen dem Vorsprung und der Rückseite liegt.

Eine weitere bevorzugte Ausgestaltung zeichnet sich dadurch aus, dass jeweils ein aus einer der Seitenflächen des Lichtleiters herausragender lichtleitender und zweite Teilflächen aufweisender Vorsprung des Lichtleiters am Übergang einer ersten Seitenfläche zur Vorderseite und am Übergang einer zweiten Seitenfläche zur Vorderseite angeordnet ist.

Bevorzugt ist auch, dass ein aus einer der Seitenflächen des Lichtleiters herausragender lichtleitender und zweite Teilflächen aufweisender Vorsprung am Übergang einer ersten Seitenfläche in die Rückseite angeordnet ist.

Ferner ist bevorzugt, dass ein aus einer der Seitenflächen des Lichtleiters herausragender lichtleitender und zweite Teilflächen aufweisender Vorsprung am Übergang einer zweiten Seitenfläche in die Rückseite angeordnet ist.

Eine weitere bevorzugte Ausgestaltung zeichnet sich dadurch aus, dass jeweils ein aus einer der Seitenflächen des Lichtleiters herausragender lichtleitender und zweite Teilflächen aufweisender Vorsprung an verschiedenen Orten eines Lichtleiters angeordnet ist, so dass ein Lichtleiter mehrere solcher Vorsprünge aufweist, die räumlich voneinander getrennt sind.

Ferner ist bevorzugt, dass die konvexe Krümmung einer Kreisbogenform oder einer elliptischen Form entspricht.

Eine weitere bevorzugte Ausgestaltung zeichnet sich dadurch aus, dass die konvexe Krümmung und die Höhe des Lichtleiters in seiner zu seiner Führungslinie senkrechten Ebene so dimensioniert sind, dass die Höhe der ersten Teilflächen für einen Betrachter optisch so vergrößert wird, dass die Höhe der ersten Teilflächen der Höhe des Lichtleiters zu entsprechen scheint.

Ferner ist bevorzugt, dass der Lichtleiter in einem zu seiner Führungslinie senkrechten Querschnitt eine Form aufweist, die sich von seiner Vorderseite ausgehend und auf seine Rückseite zulaufend verjüngt.

Bevorzugt ist auch, dass die Kraftfahrzeugbeleuchtungseinrichtung ein Bauteil aufweist, das die Vorderseite für den Betrachtungswinkelbereich verdeckt, und dass der im Lichtweg des über die zweite Teilfläche direkt ausgetretenen Lichtes angeordnete Reflektor dazu eingerichtet ist, dieses Licht durch den Lichtleiter hindurch oder an dem Lichtleiter vorbei in den von dem Bauteil verdeckten Betrachtungswinkelbereich zu richten.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Dabei bezeichnen gleiche Bezugszeichen in verschiedenen Figuren jeweils gleiche oder zumindest ihrer Funktion nach vergleichbare Elemente. Es zeigen, jeweils in schematischer Form:
Figur 1 eine Ausgestaltung eines langgestreckten Lichtleiters, der mit der Kraftfahrzeugbeleuchtungseinrichtung verwendet werden kann;
Figur 2 den Lichtleiter aus der Figur 1 in einer Seitenansicht;
Figur 3 den Gegenstand der Figur 2 mit Strahlengängen; und
Figur 4 ein Ausführungsbeispiel einer erfindungsgemäßen Kraftfahrzeugbeleuchtungseinrichtung.

Gleiche Bezugszeichen bezeichnen dabei gleiche oder ihrer Funktion nach vergleichbare Merkmale.

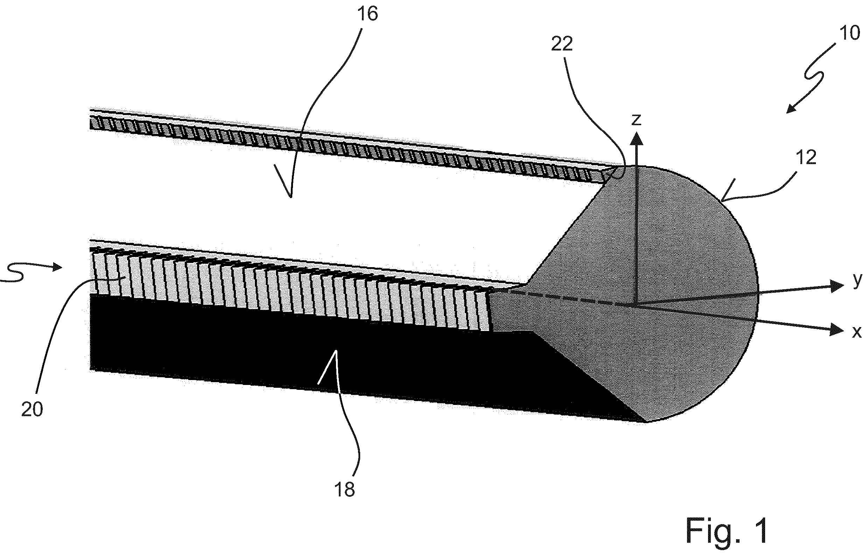

Im Einzelnen zeigt die Figur 1 eine Ausgestaltung eines langgestreckten Lichtleiters 10, wie er in einer erfindungsgemäßen Kraftfahrzeugbeleuchtungseinrichtung verwendet werden kann. Der Lichtleiter erstreckt sich hier längs einer Führungslinie x, die im dargestellten Beispiel einen geraden Verlauf besitzt. Die Führungslinie x und damit auch der Lichtleiter 10 können jedoch auch einen im Raum gekrümmten Verlauf aufweisen. Die Führungslinie stellt in diesem Fall zum Beispiel eine kontinuierlich im Zentrum des Lichtleiters 10 verlaufende Mittellinie dar. Ausgehend von dieser Führungslinie x ergeben sich zwei lokal zur Führungslinie x und zueinander jeweils senkrechte Richtungen y und z, wobei die y-Richtung jeweils in das Zentrum der als primäre Lichtaustrittsfläche dienenden Vorderseite 12 zeigt und die z-Richtung im dargestellten Beispiel die Richtung der Höhe des Lichtleiters 10 in der zur Richtung seiner Führungslinie x verbleibenden senkrechten Richtung y ist.

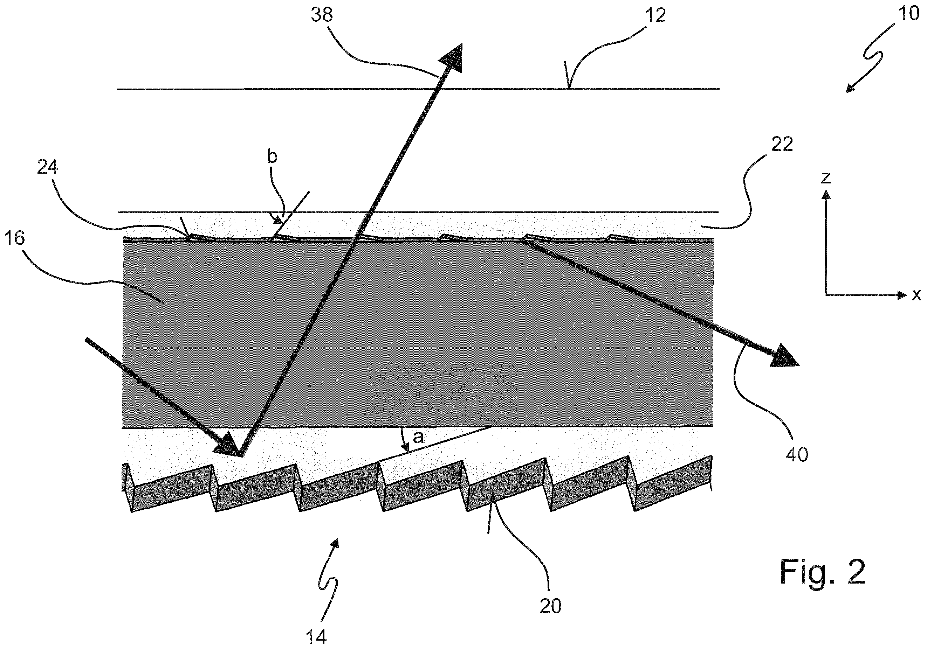

Zusätzlich zu seiner sich in längs der Führungslinie x erstreckenden Vorderseite 12 weist der Lichtleiter 10 eine der Vorderseite 12 gegenüberliegende Rückseite 14 und zwischen der Vorderseite 12 und der Rückseite 14 liegende Seitenflächen 16, 18 auf. In der Rückseite 14 sind erste Teilflächen 20 angeordnet, die ein lichtleitendes Volumen des Lichtleiters 10 begrenzen. Darüber hinaus weist der Lichtleiter 10 zweite Teilflächen 24 (vergleiche Figur 2)auf, die einen aus einer der Seitenflächen 16, 18, hier der Seitenfläche 16, des Lichtleiters 10 herausragenden lichtleitenden Vorsprung 22 des Lichtleiters 10 begrenzen.

Die Funktionsweise von Lichtleitern ist wohlbekannt. Licht, dass eine zur Führungslinie parallele Richtungskomponente besitzt und nicht zu steil auf den Lichtleiter begrenzende Grenzflächen auftrifft, erfährt dort jeweils interne Totalreflexionen, so dass das Licht zwar seine Richtung ändert, aber nicht aus dem Lichtleiteraustritt. Bei dem in der Figur 1 dargestellten Lichtleiter ist das für die Seitenflächen und die Vorderseite, soweit sie als glatte Flächen ausgestaltet sind, der Fall. Solche Flächen, an denen das Licht interne Totalreflexionen erfährt, werden hier auch als Transportflächen bezeichnet.

Figur 2 zeigt den Lichtleiter aus der Figur 1 in einer Seitenansicht. Die Blickrichtung ist dabei entgegengesetzt zu der Richtung z in der Figur 1.

Figur 2 zeigt insbesondere den sich in einer Längsrichtung erstreckenden, langgestreckten Lichtleiter 10 zusammen mit dessen Vorderseite 12, die sich längs der Längsrichtung erstreckt, und mit seiner der Vorderseite 12 gegenüberliegenden Rückseite 14 und die zwischen der Vorderseite 12 und der Rückseite 14 liegende Seitenfläche 16. Die in der Rückseite 14 angeordneten ersten Teilflächen begrenzen das lichtleitende Volumen des Lichtleiters 10, und sie sind gegenüber der Längsrichtung x des Lichtleiters 10 mit einem ersten Anstellwinkel a verkippt angeordnet.

Die verkippten Flächen sind zum Beispiel ebene Grenzflächen von angeformten Prismen.

Figur 2 zeigt darüber hinaus zweite Teilflächen 24, die den aus einer der Seitenflächen des Lichtleiters 10 herausragenden lichtleitenden Vorsprung 22 des Lichtleiters 10 begrenzen, und die gegenüber der Längsrichtung x des Lichtleiters 10 mit einem zweiten Anstellwinkel b verkippt angeordnet sind. Auch diese verkippten Flächen sind zum Beispiel ebene Grenzflächen von angeformten Prismen.

Der zweite Anstellwinkel b ist größer als der erste Anstellwinkel a. Der zweite Anstellwinkel b ist insbesondere so groß, dass aus dem Inneren des Lichtleiters 10 einfallendes Licht, das aus derselben Richtung einfällt wie aus dem Inneren des Lichtleiters 10 auf die ersten Teilflächen 20 einfallendes Licht, das dort noch interne Totalreflexionen erfährt, direkt aus der jeweiligen zweiten Teilfläche 24 austritt.

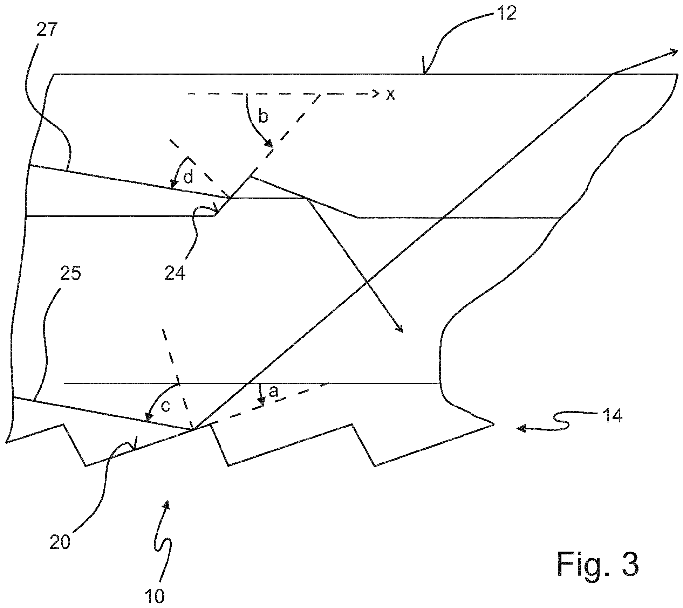

Figur 3 zeigt den Gegenstand der Figur 2 mit Strahlengängen von zunächst parallelem Licht, von dem ein Teil an den ersten Teilflächen 20 umgelenkt wird und von dem ein anderer Teil über die zweiten Teilflächen 24 austritt. Figur 3 zeigt insbesondere zwei parallele Lichtstrahlen 25, 27, die im Inneren des Lichtleiters 10 mit einer Richtung verlaufen, die beim Auftreffen auf eine der glatten Transportflächen des Lichtleiters 10 interne Totalreflexionen als Folge hätte. Im dargestellten Fall treffen die Strahlen 25, 27 aber nicht auf eine glatte Transportfläche. Stattdessen trifft der Strahl 25 auf die eine erste Teilfläche 20, die ein lichtleitendes Volumen des Lichtleiters begrenzt und die gegenüber der Längsrichtung des Lichtleiters mit einem ersten Anstellwinkel verkippt angeordnet ist, und der Strahl 27 trifft auf eine zweite Teilfläche 24 die einen aus einer der Seitenflächen des Lichtleiters herausragenden lichtleitenden Vorsprung des Lichtleiters begrenzt und die gegenüber der Längsrichtung des Lichtleiters mit einem zweiten Anstellwinkel verkippt angeordnet ist.

Der Winkel c, den der Strahl 25 mit dem Lot auf die erste Teilfläche 20 einschließt, ist dann größer als der Winkel d, den der Strahl 27 mit dem Lot auf die zweite Teilfläche 24 einschließt. Dies ergibt sich aus den unterschiedlichen Anstellwinkeln a, b der beiden Teilflächen 20, 24 zur Längsrichtung x. Für alle Einfallsrichtungen der Strahlen 25, 27, für die der Winkel d größer als der Grenzwinkel der Totalreflexion ist und für die der Winkel e kleiner als der Grenzwinkel der Totalreflexion ist, werden die Lichtstrahlen 25 zur Vorderseite umgelenkt, während die Lichtstrahlen 27 direkt aus den zweiten Teilflächen 24 austreten.

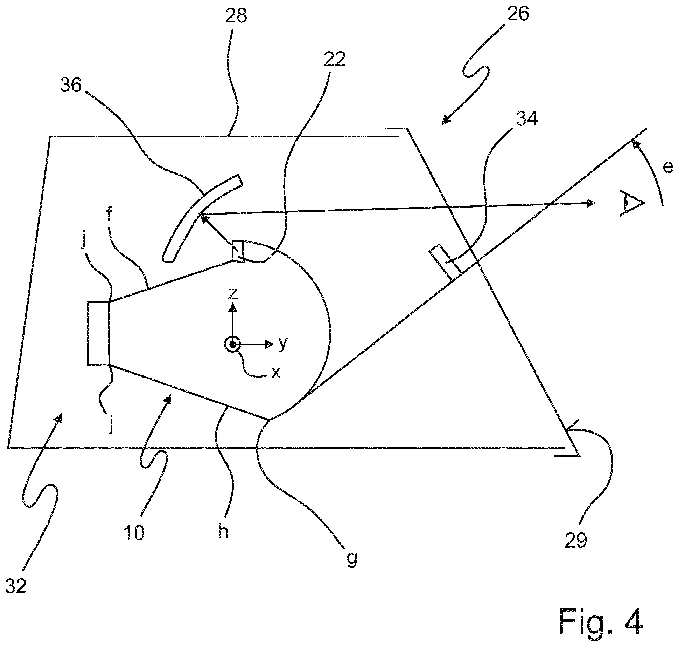

Figur 4 zeigt ein Ausführungsbeispiel einer erfindungsgemäßen Kraftfahrzeugbeleuchtungseinrichtung 26. Die Kraftfahrzeugbeleuchtungseinrichtung 26 weist ein Gehäuse 28 auf, dessen Lichtaustrittsöffnung durch eine transparente Abdeckscheibe 29 abgedeckt wird. Im Inneren des Gehäuses 28 befindet sich ein eine Signallichtfunktion erfüllendes Leuchtenmodul 32, das den sich in der Längsrichtung erstreckenden, langgestreckten Lichtleiter 10 aufweist. Die Längsrichtung steht hier senkrecht auf der Zeichnungsebene. Die Kraftfahrzeugbeleuchtungseinrichtung kann zusätzlich zu dem Leuchtenmodul 32 ein oder mehrere weiter Lichtmodule enthalten. Die weiteren Lichtmodule können Signalfunktionen erfüllende Leuchtenmodule und/oder Scheinwerferlichtfunktionen erfüllende Lichtmodule sein.

Figur 4 zeigt auch die sich in der Längsrichtung erstreckende Vorderseite 12, die der Vorderseite 12 gegenüberliegende Rückseite 14 und die zwischen der Vorderseite 12 und der Rückseite 14 liegenden Seitenflächen 16, 18. In der Rückseite 14 sind die oben beschriebenen ersten Teilflächen 20 angeordnet, die das lichtleitende Volumen des Lichtleiters 10 begrenzen und die gegenüber der Längsrichtung des Lichtleiters 10 mit einem ersten Anstellwinkel a verkippt angeordnet ist.

Die Figur 4 zeigt ferner ein Bauteil 34, das die Vorderseite 12 des Lichtleiters 10 für einen Betrachtungswinkelbereich e verdeckt, so dass die Vorderseite 12 für einen Betrachter, der sich in dem Betrachtungswinkelbereich e aufhält und dessen Blick auf die Kraftfahrzeugbeleuchtungseinrichtung 26 gerichtet ist, nicht sichtbar ist. Sofern ein solcher Betrachtungswinkelbereich e in einen gesetzlich vorgeschriebenen Sichtbarkeitsbereich fällt, erfüllt die Kraftfahrzeugbeleuchtungseinrichtung ihre Lichtfunktion insofern nicht.

Zur Lösung dieses Problem dienen die zweiten Teilflächen 24 des Lichtleiters 10, die den aus einer der Seitenflächen 16, 18 des Lichtleiters 10 herausragenden lichtleitenden Vorsprung 22 des Lichtleiters 10 begrenzen, und die, wie es unter Bezug auf die Figur 2 erläutert wurde, gegenüber der Längsrichtung x des Lichtleiters 10 mit einem zweiten Anstellwinkel b verkippt angeordnet sind. Unter den unter Bezug auf die Figur 2 erläuterten Umständen tritt Licht direkt, d.h. ohne nach dem Auftreffen auf die jeweilige zweite Teilfläche 24 noch eine vor dem Lichtaustritt erfolgende interne Totalreflexion zu erfahren, aus der jeweiligen zweiten Teilfläche 24 aus.

Im Lichtweg des über die zweite Teilfläche 24 direkt ausgetretenen Lichtes ist ein Reflektor 36 angeordnet, der durch seine Form und Anordnung dazu eingerichtet ist, dieses Licht durch den Lichtleiter 10 hindurch oder an dem Lichtleiter 10 vorbei in den von dem Bauteil 34 verdeckten von dem Betrachtungswinkelbereich e zu richten.

Auf diese Weise wird mit den zweiten Teilflächen 24 Licht aus dem Lichtleiter 10 ausgekoppelt und mit dem Reflektor 36 in solche Raumrichtungen umgelenkt, aus denen der Lichtleiter 10 nicht direkt sichtbar ist. So können die Sichtbarkeitskriterien auch in Fällen erfüllt werden, in denen ein Bauteil 34, das beispielsweise eine Blende oder ein Zierrahmen oder irgendein anderes Bestandteil der Beleuchtungseinrichtung 26 ist, den Lichtleiter 10 in bestimmten Betrachtungsrichtungen verdeckt.

Der Lichtleiter läuft meistens in einer Art Rinne in einer Blende bzw. in einem Abdeckrahmen. Diese Rinne weist bevorzugt eine reflektierende Fläche als Reflektor 36 auf. Der Reflektor 36 kann aber auch ein separates Teil sein. Die Form der Rinne bzw. die als separates Teil verwirklichte Fläche folgt in ihrer Längsrichtung bevorzugt der Außenkontur des Fahrzeugs. Die Kontur des Reflektors 36 gleicht dann zum Beispiel der Innenfläche eines Torus. Die Reflexionsfläche des Reflektors ist dann beispielsweise in einer Richtung konkav und in einer dazu senkrechten Richtung konvex gekrümmt. Letztlich kann die Reflexionsfläche des Reflektors 36 ähnlich wie der Lichtleiter erzeugt werden, indem ein Profil entlang einer Führungslinie oder Führungskurve geführt wird. Das Profil kann sich aus Kurven und Geraden zusammensetzen.

Die Vorderseite 12 des Lichtleiters 10 ist in seiner zu seiner Führungslinie x senkrechten y-z-Ebene konvex gekrümmt. Damit wird erreicht, dass der Lichtleiter das über seine Vorderseite 12 austretende Licht bündelt. Die konvexe Krümmung entspricht bevorzugt einer Kreisbogenform oder einer elliptischen Form.

Die konvexe Krümmung und die Höhe des Lichtleiters 10 in seiner zu seiner Führungslinie senkrechten Ebene sind bevorzugt so dimensioniert, dass die Höhe der ersten Teilflächen für einen Betrachter optisch so vergrößert wird, dass die Höhe der Teilflächen der Höhe des Lichtleiters 10 zu entsprechen scheint.

Der Lichtleiter 10 weist in zu seiner Führungslinie x senkrechten Querschnitt eine Form auf, die sich von seiner Vorderseite ausgehend und auf seine Rückseite zulaufend verjüngt. Durch diese Form ergibt sich für zur Vorderseite 12 des Lichtleiters weisende Richtungskomponenten von im Lichtleiter 10 verlaufenden Lichtstrahlen bei internen Totalreflexionen, die an den Seitenwänden 16, 18 erfolgen, eine bündelnde Wirkung, was für die Erzeugung einer regelkonformen Lichtverteilung vorteilhaft ist.

Der aus einer der Seitenflächen 16, 18 des Lichtleiters 10 herausragende lichtleitende Vorsprung 22 des Lichtleiters 10 ist bevorzugt am Übergang von der Vorderseite zur der Seitenfläche angeordnet. Er ist damit an der breitesten Stelle des Lichtleiters angeordnet, was die Umlenkung des aus dem Vorsprung austretenden Lichtes erleichtert, weil es gewissermaßen mehr mögliche Wege um den Lichtleiter herum eröffnet als eine Anordnung an einer weniger breiten Stelle.

Ein solcher lichtleitender Vorsprung kann auch an anderen Stellen des Lichtleiters angeordnet sein. Figur 4 zeigt Beispiele von Orten f, g, h, i, j am Lichtleiter, an denen jeweils ein Vorsprung angeordnet sein kann.

Im Fall des Ortes f ist ein Vorsprung mit zweiten Teilflächen in einer ersten Seitenfläche so angeordnet, dass ein Teil der Seitenfläche zwischen der Vorderseite und dem Vorsprung und ein anderer Teil zwischen dem Vorsprung und der Rückseite liegt. Dies gilt für jede der beiden Seitenflächen 16, 18. Der Ort h liegt auf der zweiten Seitenfläche 18, die der ersten Seitenfläche gegenüberliegt, und ist ein möglicher Ort für einen Vorsprung mit zweiten Teilflächen, der in einer zweiten Seitenfläche so angeordnet ist, dass ein Teil der Seitenfläche zwischen der Vorderseite und dem Vorsprung und ein anderer Teil zwischen dem Vorsprung und der Rückseite liegt.

Im Fall des Ortes g ist jeweils ein Vorsprung mit zweiten Teilflächen am Übergang einer ersten Seitenfläche zur Vorderseite (Vorsprung 22) und am Übergang g einer zweiten Seitenfläche zur Vorderseite angeordnet .

Im Fall des Ortes i ist ein Vorsprung mit zweiten Teilflächen am Übergang einer ersten Seitenfläche 16 in die Rückseite 14 angeordnet. Im Fall des Ortes j ist ein Vorsprung mit zweiten Teilflächen am Übergang einer zweiten Teilfläche in die Rückseite angeordnet.

Die Anordnung eines solchen lichtleitenden Vorsprungs ist für je einen Lichtleiter auch nicht auf einen einzigen Ort beschränkt. Jeweils ein solcher Vorsprung mit zweiten Teilflächen kann an verschiedenen Orten eines Lichtleiters angeordnet sein, so dass ein Lichtleiter mehrere solcher Vorsprünge aufweist.

## Patentansprüche

1. Kraftfahrzeugbeleuchtungseinrichtung (26) mit einem eine Signallichtfunktion erfüllenden Leuchtenmodul (32), das einen sich längs einer Führungslinie (x) erstreckenden, langgestreckten Lichtleiter (10) aufweist, der eine sich in längs der Führungslinie (x) erstreckende Vorderseite (12), eine der Vorderseite (12) gegenüberliegende Rückseite (14) und zwischen der Vorderseite (12) und der Rückseite (14) liegende Seitenflächen (16, 18) aufweist, und der in der Rückseite (14) angeordnete erste Teilflächen (20) aufweist, die ein lichtleitendes Volumen des Lichtleiters (10) begrenzen und die gegenüber der Führungslinie (x) des Lichtleiters (10) mit einem ersten Anstellwinkel (a) verkippt angeordnet sind, und dass der Lichtleiter (10) zweite Teilflächen (24) aufweist, die einen aus einer Fläche des Lichtleiters (10) herausragenden lichtleitenden Vorsprung (22) des Lichtleiters (10) begrenzen, und die gegenüber einer Längsrichtung des Lichtleiters mit einem zweiten Anstellwinkel (b) verkippt angeordnet sind, wobei der zweite Anstellwinkel (b) größer als der erste Anstellwinkel (a) ist und insbesondere so groß ist, dass aus dem Inneren des Lichtleiters (10) auf die zweiten Teilflächen (24) einfallendes Licht (27), das aus derselben Richtung einfällt wie aus dem Inneren des Lichtleiters (10) auf die ersten Teilflächen (20) einfallendes Licht (25), das dort noch interne Totalreflexionen erfährt, direkt aus der jeweiligen zweiten Teilfläche (24) austritt, **dadurch gekennzeichnet, dass** die Fläche des Lichtleiters, aus welcher der lichtleitende Vorsprung (22) herausragt, eine Seitenfläche (16, 18) des Lichtleiters (10) ist, und dass das Leuchtenmodul (32) einen Reflektor (36) aufweist, der im Lichtweg des über die zweite Teilfläche (24) direkt ausgetretenen Lichtes angeordnet ist und dazu eingerichtet ist, dieses Licht durch den Lichtleiter (10) hindurch oder an dem Lichtleiter (10) vorbei zu richten und dass die Vorderseite (12) des Lichtleiters (10) in seiner zu seiner Führungslinie (x) senkrechten Ebene konvex gekrümmt ist.

2. Kraftfahrzeugbeleuchtungseinrichtung (26) nach Anspruch 1, **dadurch gekennzeichnet, dass** der aus einer der Seitenflächen (16, 18) des Lichtleiters (10) herausragende lichtleitende Vorsprung (22) an der breitesten Stelle des Lichtleiters (10) angeordnet ist.

3. Kraftfahrzeugbeleuchtungseinrichtung (26) nach einem der vorhergehenden Ansprüche, **dadurch gekennzeichnet, dass** der aus einer der Seitenflächen (16, 18) des Lichtleiters (10) herausragende lichtleitende Vorsprung (22) des Lichtleiters (10) am Übergang von der Vorderseite (12) zu einer Seitenfläche (16, 18) angeordnet ist.

4. Kraftfahrzeugbeleuchtungseinrichtung (26) nach einem der vorhergehenden Ansprüche, **dadurch gekennzeichnet, dass** ein Vorsprung (22) mit zweiten Teilflächen (24) in einer ersten Seitenfläche (16) so angeordnet ist, dass ein Teil der ersten Seitenfläche (16) zwischen der Vorderseite (12) und dem Vorsprung und ein anderer Teil zwischen dem Vorsprung (22) und der Rückseite (14) liegt.

5. Kraftfahrzeugbeleuchtungseinrichtung (26) nach einem der vorhergehenden Ansprüche, **dadurch gekennzeichnet, dass** jeweils ein aus einer der Seitenflächen (16, 18) des Lichtleiters (10) herausragender lichtleitender und zweite Teilflächen aufweisender Vorsprung (22) des Lichtleiters (10) am Übergang einer ersten Seitenfläche (16) zur Vorderseite (12) und am Übergang (g) einer zweiten Seitenfläche (18) zur Vorderseite (12) angeordnet ist.

6. Kraftfahrzeugbeleuchtungseinrichtung (26) nach einem der vorhergehenden Ansprüche, **dadurch gekennzeichnet, dass** ein aus einer der Seitenflächen (16, 18) des Lichtleiters (10) herausragender lichtleitender und zweite Teilflächen aufweisender Vorsprung (22) am Übergang einer ersten Seitenfläche (16) in die Rückseite (14) angeordnet ist.

7. Kraftfahrzeugbeleuchtungseinrichtung (26) nach einem der vorhergehenden Ansprüche, **dadurch gekennzeichnet, dass** ein aus einer der Seitenflächen (16, 18) des Lichtleiters (10) herausragender lichtleitender und zweite Teilflächen aufweisender Vorsprung (22) am Übergang einer zweiten Seitenfläche (18) in die Rückseite (14) angeordnet ist.

8. Kraftfahrzeugbeleuchtungseinrichtung (26) nach einem der vorhergehenden Ansprüche, **dadurch gekennzeichnet, dass** jeweils ein aus einer der Seitenflächen (16, 18) des Lichtleiters (10) herausragender lichtleitender und zweite Teilflächen aufweisender Vorsprung (22) an verschiedenen Orten eines Lichtleiters (10) angeordnet ist, so dass ein Lichtleiter (10) mehrere solcher Vorsprünge (22) aufweist, die räumlich voneinander getrennt sind.

9. Kraftfahrzeugbeleuchtungseinrichtung (26) nach Anspruch 1, **dadurch gekennzeichnet, dass** die konvexe Krümmung einer Kreisbogenform oder einer elliptischen Form entspricht.

10. Kraftfahrzeugbeleuchtungseinrichtung (26) nach Anspruch 1 oder 9, **dadurch gekennzeichnet, dass** die konvexe Krümmung und die Höhe des Lichtleiters (10) in seiner zu seiner Führungslinie senkrechten Ebene so dimensioniert sind, dass die Höhe der ersten Teilflächen (20) für einen Betrachter optisch so vergrößert wird, dass die Höhe der ersten Teilflächen (20) der Höhe des Lichtleiters (10) zu entsprechen scheint.

11. Kraftfahrzeugbeleuchtungseinrichtung (26) nach einem der Ansprüche 1, 9 oder 10, **dadurch gekennzeichnet, dass** der Lichtleiter (10) in einem zu seiner Führungslinie (x) senkrechten Querschnitt eine Form aufweist, die sich von seiner Vorderseite (12) ausgehend und auf seine Rückseite (14) zulaufend verjüngt.

12. Kraftfahrzeugbeleuchtungseinrichtung (26) nach einem der vorhergehenden Ansprüche, **dadurch gekennzeichnet, dass** sie ein Bauteil (34) aufweist, das die Vorderseite (12) für einen Betrachtungswinkelbereich (e) verdeckt, und dass der im Lichtweg des über die zweite Teilfläche (24) direkt ausgetretenen Lichtes angeordnete Reflektor (36) dazu eingerichtet ist, dieses Licht durch den Lichtleiter (10) hindurch oder an dem Lichtleiter (10) vorbei in den von dem Bauteil (34) verdeckten Betrachtungswinkelbereich (e) zu richten.

## Claims

1. Motor vehicle lighting device (26) with a lamp module (32) fulfilling a signal light function, which has an elongated light guide (10) extending along a guide line (x), which has a front side (12) extending along the guide line (x), a rear side (14) opposite the front side (12) and lateral surfaces (16, 18) lying between the front side (12) and the rear side (14), and which has first partial surfaces (20) arranged in the rear side (14), which define a light-conducting volume of the light guide (10) and which are arranged tilted with respect to the guide line (x) of the light guide (10) at a first angle of attack (a), and that the light guide (10) has second partial surfaces (24) which define a light-conducting protrusion (22) of the light guide (10) protruding from a surface (16, 18) of the light guide (10) and which are arranged tilted with respect to a longitudinal direction of the light guide at a second angle of attack (b), wherein the second angle of attack (b) is greater than the first angle of attack (a) and in particular is so large that light (27) incident on the second partial surfaces (24) from the interior of the light guide (10), which light (27) is incident on the second partial surfaces (24) from the same direction as light (25) incident on the first partial surfaces (20) from the interior of the light guide (10), which light (25) still undergoes total internal reflections there, emerges directly from the respective second partial surface (24), **characterised in that** the surface of the light guide, from which the light-conducting protrusion (22) protrudes, is a lateral surface (16, 18) of the light guide (10), and that the lamp module (32) has a reflector (36) which is arranged in the light path of the light directly emitted via the second partial surface (24) and is designed to direct this light through the light guide (10) or past the light guide (10), and that the front side (12) of the light guide (10) is convexly curved in its plane perpendicular to its guide line (x).

2. Motor vehicle lighting device (26) according to claim 1, **characterised in that** the light-conducting protrusion (22) protruding from one of the lateral surfaces (16, 18) of the light guide (10) is arranged at the widest place of the light guide (10).

3. Motor vehicle lighting device (26) according to one of the preceding claims, **characterised in that** the light-conducting protrusion (22) of the light guide (10) protruding from one of the lateral surfaces (16, 18) of the light guide (10) is arranged at the transition from the front side (12) to a lateral surface (16, 18).

4. Motor vehicle lighting device (26) according to one of the preceding claims, **characterized in that** a protrusion (22) with second partial surfaces (24) is arranged in a first lateral surface (16) in such a way that a part of the first lateral surface (16) lies between the front side (12) and the protrusion and another part lies between the protrusion (22) and the rear side (14).

5. Motor vehicle lighting device (26) according to one of the preceding claims, **characterised in that** in each case a light-conducting protrusion (22) of the light guide (10) protruding from one of the lateral surfaces (16, 18) of the light guide (10) and having second partial surfaces is arranged at the transition of a first lateral surface (16) to the front side (12) and at the transition (g) of a second lateral surface (18) to the front side (12) .

6. Motor vehicle lighting device (26) according to one of the preceding claims, **characterised in that** a light-conducting protrusion (22) protruding from one of the lateral surfaces (16, 18) of the light guide (10) and having second partial surfaces is arranged at the transition of a first lateral surface (16) to the rear side (14).

7. Motor vehicle lighting device (26) according to one of the preceding claims, **characterised in that** a light-conducting protrusion (22) protruding from one of the lateral surfaces (16, 18) of the light guide (10) and having second partial surfaces is arranged at the transition of a second lateral surface (18) into the rear side (14).

8. Motor vehicle lighting device (26) according to one of the preceding claims, **characterised in that** a respective light-conducting protrusion (22) protruding from one of the lateral surfaces (16, 18) of the light guide (10) and having second partial surfaces is arranged at different locations of a light guide (10), so that a light guide (10) has several such protrusions (22) which are spatially separated from one another.

9. Motor vehicle lighting device (26) according to claim 1, **characterised in that** the convex curvature corresponds to a circular arc shape or an elliptical shape.

10. Motor vehicle lighting device (26) according to claim 1 or 9, **characterised in that** the convex curvature and the height of the light guide (10) in its plane perpendicular to its guide line are dimensioned such that the height of the first partial surfaces (20) is optically increased for an observer such that the height of the first partial surfaces (20) appears to correspond to the height of the light guide (10).

11. Motor vehicle lighting device (26) according to one of claims 1, 9 or 10, **characterised in that** the light guide (10) has a shape in a cross-section perpendicular to its guide line (x) which tapers outbund from its front side (12) and inbound towards its rear side (14).

12. Motor vehicle lighting device (26) according to one of the preceding claims, **characterised in that** it has a component (34) which conceals the front side (12) for a viewing angle range (e), and **in that** the reflector (36) arranged in the light path of the light which has emerged directly via the second partial surface (24) is designed to direct this light through the light guide (10) or past the light guide (10) into the viewing angle range (e) concealed by the component (34).

## Revendications

1. Dispositif d'éclairage de véhicule automobile (26) comprenant un module d'éclairage (32) qui remplit une fonction de feu de signalisation et qui présente un guide de lumière (10) allongé lequel s'étend le long d'une ligne de guidage (x) et lequel présente une face avant (12) s'étendant le long de la ligne de guidage (x), une face arrière (14) opposée à la face avant (12) ainsi que des surfaces latérales (16, 18) situées entre la face avant (12) et la face arrière (14), et lequel présente de premières surfaces partielles (20) disposées dans la face arrière (14) qui délimitent un volume de guidage de lumière du guide de lumière (10) et qui sont disposées de manière à être inclinées par rapport à la ligne de guidage (x) du guide de lumière (10) à un premier angle d'incidence (a), et que le guide de lumière (10) comprend de deuxièmes surfaces partielles (24) qui délimitent une projection de guidage de lumière (22) du guide de lumière (10), qui fait saillie d'une surface (16, 18) du guide de lumière (10) et qui sont disposées de manière à être inclinées par rapport à une direction longitudinale du guide de lumière à un deuxième angle d'incidence (b), dans lequel le deuxième angle d'incidence (b) est supérieur au premier angle d'incidence (a) et, en particulier, est si grand que de la lumière (27) qui est incidente de l'intérieur du guide de lumière (10) sur les deuxièmes surfaces partielles (24) et qui est incidente depuis la même direction que de la lumière (25) qui est incidente de l'intérieur du guide de lumière (10) sur les premières surfaces partielles (20) et qui y subit encore des réflexions internes totales, sort directement de la deuxième surface partielle (24) respective, **caractérisé par le fait que** la surface du guide de lumière de laquelle fait saillie la projection (22) de guidage de lumière est une surface latérale (16, 18) du guide de lumière (10), et que le module d'éclairage (32) comprend un réflecteur (36) qui est disposé dans le trajet de lumière de la lumière qui est sortie directement par la deuxième surface partielle (24) et qui est agencé pour diriger cette lumière à travers le guide de lumière (10) ou de manière à ce qu'elle passe devant le guide de lumière (10), et que la face avant (12) du guide de lumière (10) est incurvée de manière convexe dans son plan perpendiculaire à sa ligne de guidage (x).

2. Dispositif d'éclairage de véhicule automobile (26) selon la revendication 1, **caractérisé par le fait que** la projection de guidage de lumière (22) qui fait saillie de l'une des surfaces latérales (16, 18) du guide de lumière (10) est disposée sur le point le plus large du guide de lumière (10).

3. Dispositif d'éclairage de véhicule automobile (26) selon l'une quelconque des revendications précédentes, **caractérisé par le fait que** la projection (22) de guidage de lumière du guide de lumière (10), qui fait saillie de l'une des surfaces latérales (16, 18) du guide de lumière (10) est disposée sur la transition de la face avant (12) à une surface latérale (16, 18).

4. Dispositif d'éclairage de véhicule automobile (26) selon l'une quelconque des revendications précédentes, **caractérisé par le fait qu'**une projection (22) ayant de deuxièmes surfaces partielles (24) est disposée dans une première surface latérale (16) de telle sorte qu'une partie de la première surface latérale (16) est située entre la face avant (12) et la projection et une autre partie est située entre la projection (22) et la face arrière (14).

5. Dispositif d'éclairage de véhicule automobile (26) selon l'une quelconque des revendications précédentes, **caractérisé par le fait que** respectivement une projection (22) de guidage de lumière du guide de lumière (10), qui fait saillie de l'une des surfaces latérales (16, 18) du guide de lumière (10) et qui présente de deuxièmes surfaces partielles est disposée sur la transition d'une première surface latérale (16) à la face avant (12) et sur la transition (g) d'une deuxième surface latérale (18) à la face avant (12).

6. Dispositif d'éclairage de véhicule automobile (26) selon l'une quelconque des revendications précédentes, **caractérisé par le fait qu'**une projection (22) de guidage de lumière qui fait saillie de l'une des surfaces latérales (16, 18) du guide de lumière (10) et qui présente de deuxièmes surfaces partielles est disposée sur la transition d'une première surface latérale (16) dans la face arrière (14).

7. Dispositif d'éclairage de véhicule automobile (26) selon l'une quelconque des revendications précédentes, **caractérisé par le fait qu'**une projection (22) de guidage de lumière qui fait saillie de l'une des surfaces latérales (16, 18) du guide de lumière (10) et qui présente de deuxièmes surfaces partielles est disposée sur la transition d'une deuxième surface latérale (16) dans la face arrière (14).

8. Dispositif d'éclairage de véhicule automobile (26) selon l'une quelconque des revendications précédentes, **caractérisé par le fait que** respectivement une projection (22) de guidage de lumière qui fait saillie de l'une des surfaces latérales (16, 18) du guide de lumière (10) et qui présente de deuxièmes surfaces partielles est disposée à différents endroits d'un guide de lumière (10) de sorte qu'un guide de lumière (10) présente une pluralité de telles projections (22) qui sont spatialement séparées les unes des autres.

9. Dispositif d'éclairage de véhicule automobile (26) selon la revendication 1, **caractérisé par le fait que** la courbure convexe correspond à une forme d'arc de cercle ou à une forme elliptique.

10. Dispositif d'éclairage de véhicule automobile (26) selon la revendication 1 ou 9, **caractérisé par le fait que** la courbure convexe et la hauteur du guide de lumière (10) dans son plan perpendiculaire à sa ligne de guidage sont dimensionnées de telle manière que la hauteur des premières surfaces partielles (20) est optiquement agrandie pour un observateur de telle sorte que la hauteur des premières surfaces partielles (20) semble correspondre à la hauteur du guide de lumière (10).

11. Dispositif d'éclairage de véhicule automobile (26) selon l'une quelconque des revendications 1, 9 ou 10, **caractérisé par le fait que** le guide de lumière (10) présente une forme en une coupe transversale perpendiculaire à sa ligne de guidage (x), qui se rétrécit à partir de sa face avant (12) et en direction de sa face arrière (14).

12. Dispositif d'éclairage de véhicule automobile (26) selon l'une quelconque des revendications précédentes, **caractérisé par le fait qu'**il comprend un composant (34) qui recouvre la face avant (12) pour une plage d'angle de vision (e), et que le réflecteur (36) qui est disposé dans le trajet de lumière de la lumière qui est sortie directement par la deuxième surface partielle (24) est agencé pour diriger cette lumière à travers le guide de lumière (10) ou de manière à ce qu'elle passe devant le guide de lumière (10), dans la plage d'angle de vision (e) recouverte par ledit composant (34).
